Europäisches Patentamt

European Patent Office

Office européen des brevets

(11) Numéro de publication: **0 343 034 B1**

# FASCICULE DE BREVET EUROPEEN

(45) Date de publication de fascicule du brevet: **27.10.93**   (51) Int. Cl.⁵: **G01S  13/82**

(21) Numéro de dépôt: **89401260.8**

(22) Date de dépôt: **03.05.89**

(54) **Système radio de transmission de données avec une station d'extrémité passive.**

(30) Priorité: **20.05.88 FR 8806794**

(43) Date de publication de la demande:
**23.11.89 Bulletin  89/47**

(45) Mention de la délivrance du brevet:
**27.10.93 Bulletin  93/43**

(84) Etats contractants désignés:
**BE CH DE GB IT LI SE**

(56) Documents cités:
**EP-A- 0 198 642**
**EP-A- 0 247 612**
**EP-A- 0 308 964**
**US-A- 4 075 632**

**PATENT ABSTRACTS OF JAPAN, vol. 3, no.**
**143 (E-154)[29], 27 novembre 1979, page 29 E**
**154;& JP-A-54 121 093**

(73) Titulaire: **FRANCE TELECOM**
**6, Place d'Alleray**
**F-75015 Paris(FR)**

(72) Inventeur: **Guena, Jean**
**30, Cité Morgane**
**F-22560 Trebeurden(FR)**
Inventeur: **Leost, Jean-Claude**
**13, rue Jean-Bart**
**F-22700 Perros-Guirec(FR)**
Inventeur: **Meyer, Sylvain**
**49, Résidence Duroux**
**F-22300 Lannion(FR)**

(74) Mandataire: **Cabinet Martinet & Lapoux**
**BP 405**
**F-78055 Saint Ouentin en Yvelines Cédex**
**(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne de manière générale les communications radio de proximité. Plus particulièrement, l'invention concerne un système radio de transmission de données par micro-ondes entre une station centrale et une extrémité passive ne comprenant pas de source hyperfréquence propre et fonctionnant en mode réponse.

Un tel système radio est utilisable pour échanger des informations à courte distance entre un point privilégié ou station centrale et une ou plusieurs extrémités passives ou stations terminales qui doivent rester très simples de conception pour satisfaire à des contraintes de coût et d'encombrement. Ce type de système radio a de nombreuses applications, par exemple dans :
- des systèmes de collecte à distance de données tels qu'un système de relevé de compteurs domestiques à interrogateur radio mobile,
- des systèmes de gestion d'accès ou de pointage avec interrogation à distance de numéros de code mémorisés dans des cartes individuelles d'accès ou de pointage,
- des systèmes de signalisation routière ou ferroviaire,
- des systèmes de tri automatique par exemple de colis postaux,
- des systèmes de facturation automatique à paiement par carte à puce sans contact,
- etc...

Plusieurs systèmes radio à une extrémité passive sont connus dans l'état de la technique. De manière générale, comme par exemple dans une carte répondeur codée divulguée par par la FR-A-2 527 870, il est fait appel à une modulation d'amplitude pour transmettre des données selon le sens de transmission de l'extrémité passive vers la station centrale. Une micro-onde incidente émise par la station centrale est reçue par l'extrémité passive qui module en amplitude par des données à transmettre la micro-onde incidente reçue ou l'une de ses harmoniques avant de la réémettre vers la station centrale. L'extrémité passive s'alimente à partir de la micro-onde incidente. Un circuit de redressement et de filtrage est généralement prévu pour produire une tension continue d'alimentation à partir de la micro-onde incidente reçue.

La micro-onde modulée réémise par l'extrémité passive vers la station centrale est de faible puissance du fait du faible rendement énergétique à la réception de la micro-onde incidente et de l'énergie prélevée pour alimenter l'extrémité passive et consécutivement un tel système radio a nécessairement une portée limitée. De plus, la modulation d'amplitude présente une faible immunité au bruit comparativement à une modulation de fréquence su de phase ce qui ne favorise pas la portée du système selon la technique antérieure.

Une solution pour améliorer la portée d'un système radio à une extrémité passive est par exemple de remplacer la modulation d'amplitude de la micro-onde réémise par une modulation à deux états de phase ayant une meilleure immunité au bruit. Néanmoins, cette solution présente des difficultés de mise en oeuvre car l'extrémité passive doit rester très simple et il n'est donc pas possible d'utiliser des modulateurs de phase connus de conception trop complexe.

Le document EP-A-O 247 612 décrit un appareil de transmission de données entre des station centrale et station terminale. La station centrale transmet périodiquement un signal composé comprenant un signal de commande et alternativement ou bien une porteuse modulée par des données à transmettre de la station centrale vers la station terminale, ou bien une porteuse non modulée. Cette porteuse non modulée est reçue par une antenne de la station terminale. Elle est modulée par des données à transmettre de la station terminale vers la station centrale. Ce document prévoit que le signal de commande convoyant, en outre, un ordre de lecture ou un ordre d'écriture vers la station terminale, présente une polarisation croisée par rapport aux porteuses modulée ou non modulée transmises de la station centrale. Cette différence de polarisation permet de séparer le signal de commande et la porteuse modulée/non modulée dans la station terminale.

La présente invention vise à fournir un système radio de transmission de données à une extrémité passive dans lequel une modulation à deux états de phase est mise en oeuvre pour le sens de transmission extrémité passive - station centrale. L'extrémité passive ou station terminale d'un système radio selon l'invention reste extrêmement simple et peu encombrante.

A cette fin, le système radio selon l'invention est tel que défini par la revendication 1.

Selon une variante de réalisation autorisant une détection plus performante du premier signal de données à partir de la première micro-onde, la station terminale est équipée de moyens de détection quadratique. Ces moyens de détection quadratique comprennent un transistor à effet de champ ayant une première électrode reliée à une masse de référence de la station terminale, une seconde électrode reliée à un court-circuit réflecteur et une troisième électrode recevant la première micro-onde pour produire à la seconde électrode un signal représentatif du carré de la première micro-onde et détecter une composante continue dudit signal représentative du premier signal de données.

De préférence la station centrale est telle que définie à la revendication 5.

L'invention sera mieux comprise à la lecture de la description suivante de plusieurs réalisations préférées du système radio selon l'invention en référence aux dessins annexés correspondants dans lesquels :

- la Fig. 1 est un bloc-diagramme du système radio de transmission de données à une extrémité passive selon l'invention ;
- la Fig. 2 montre une réalisation en technologie micro-ruban d'une antenne et de mélangeurs micro-ondes inclus dans une station centrale du système radio selon l'invention ;
- les Figs. 3 et 4 montrent respectivement le schéma de principe et une réalisation en technologie micro-ruban d'un détecteur quadratique d'amplitude inclus dans une station terminale du système radio selon l'invention ;
- la Fig. 5 est un schéma de principe d'un commutateur micro-onde inclus dans la station terminale ;
- la Fig. 6 montre une réalisation en technologie micro-ruban d'une carte à puce sans contact équipée d'une station terminale d'un système radio selon l'invention ;
- la Fig. 7 est un schéma de principe d'un mélangeur micro-onde inclus dans la station centrale ;
- la Fig. 8 est un bloc-diagramme d'un détecteur de phase inclus dans la station centrale ; et
- la Fig. 9 montre un diagramme logique relatif au fonctionnement d'un circuit logique de commande inclus dans le détecteur de phase de la Fig.8 pour récupérer un signal de données transmis par la station terminale à partir d'une sélection dynamique d'un signal de démodulation parmi quatre signaux de démodulation disponibles.

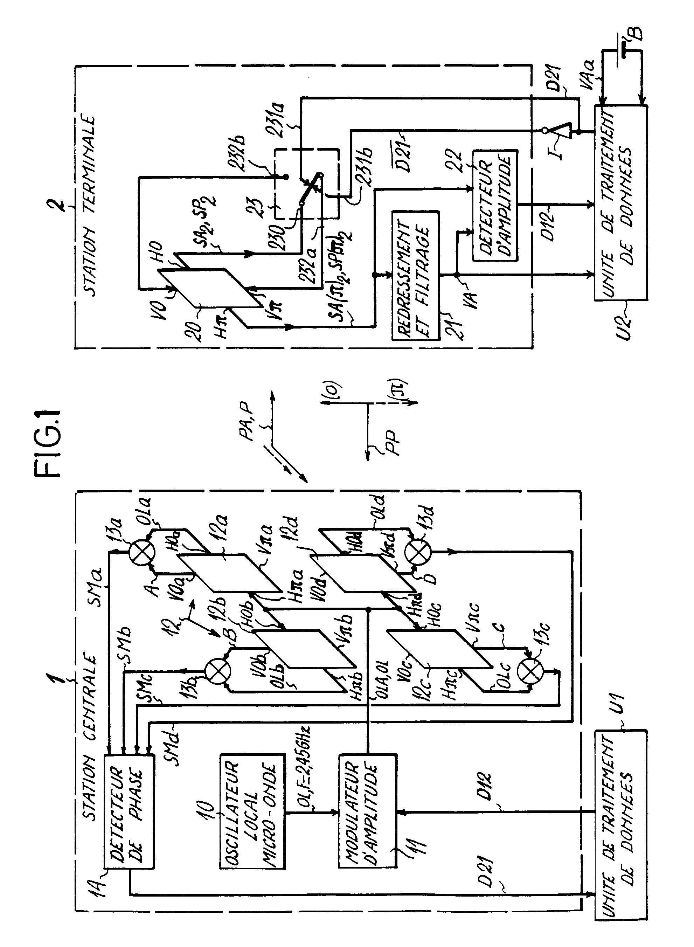

En référence à la Fig. 1, le système radio de transmission de données selon l'invention permet de transmettre alternativement des signaux numériques de données de type série D12 et D21 entre deux unités distantes de traitement de données U1 et U2. Les unités U1 et U2 sont respectivement connectées à une station centrale 1 et à une station terminale 2 du système. Les stations centrale et terminale 1 et 2 constituent des équipements radio de transmission de données associés aux unités U1 et U2. L'unité U1 et la station centrale 1 sont par exemple inclus dans un publiphone à carte de paiement sans contact. L'unité U2 et la station terminale 2 sont dans ce cas incluses dans une carte de paiement sans contact du type carte à puce électronique.

La transmission des signaux de données D12 et D21 alternativement de la station centrale 1 vers la station terminale 2 et inversement fait appel respectivement à une modulation d'amplitude et à une modulation à deux états de phase 0 et $\pi$ d'une même micro-onde P de fréquence F émise par la station centrale 1. Des périodes de transmission de données de l'unité U1 vers l'unité U2 et inversement sont alternativement attribuées aux unités de traitement de données U1 et U2. Pendant les périodes de transmission de données qui leur sont attribuées, les unités U1 et U2 transmettent respectivement les signaux de données D12 et D21. Des caractères réservés XON et XOFF portés par les signaux de données D12 et D21 sont échangés entre les unités U1 et U2 afin de s'informer des début et fin d'une période de transmission de données.

Pendant les périodes de transmission de données de l'unité U1 vers l'unité U2, la station centrale 2 émet par exemple en polarisation rectiligne horizontale H, une micro-onde PA de fréquence F qui est modulée en amplitude par le signal de données D12. Pendant les périodes de transmission de données de l'unité U2 vers l'unité U1, la station centrale 1 émet en polarisation rectiligne horizontale H la micro-onde non modulée P. La micro-onde P est détectée par une antenne de la station terminale 2 et est modulée à deux états de phase 0 et $\pi$ par le signal de données D21 pour produire une micro-onde modulée en phase PP de fréquence F réémise vers la station centrale 1 en polarisation rectiligne croisée, c'est-à-dire dans cet exemple en polarisation rectiligne verticale V. Les micro-ondes modulées PA et PP sont démodulées respectivement dans les stations terminale 2 et centrale 1 afin de récupérer les signaux de données D12 et D21.

La station centrale 1 comprend un oscillateur local micro-onde 10, un modulateur d'amplitude 11, une antenne micro-onde 12, et des moyens de démodulation synchrone de phase constitués par quatre mélangeurs 13a à 13d et un détecteur de phase 14.

L'oscillateur local 10 produit un signal micro-onde OL de fréquence F par exemple égale à 2,45 GHz. Le signal OL est appliqué à une première entrée du modulateur d'amplitude 11. Une seconde entrée du modulateur 11 reçoit le signal de données D12 transmis par l'unité U1.

Pendant les périodes de transmission de données de l'unité U1 vers l'unité U2, le signal D12 est actif et le modulateur 11 délivre en sortie un signal micro-onde modulé OLA correspondant au signal micro-onde OL modulé en amplitude par le signal D12. Le signal micro-onde modulé OLA est appliqué à des accès à polarisation horizontale de l'antenne 12 et celle-ci émet en réponse la micro-onde correspondante PA polarisée horizontalement.

Pendant les périodes de transmission de données de l'unité U2 vers l'unité U1, le signal D12 est inactif et le modulateur 11 délivre en sortie le signal micro-onde OL. Le signal OL est appliqué aux accès à polarisation horizontale de l'antenne 12 et celle-ci émet en réponse la micro-onde correspondante P.

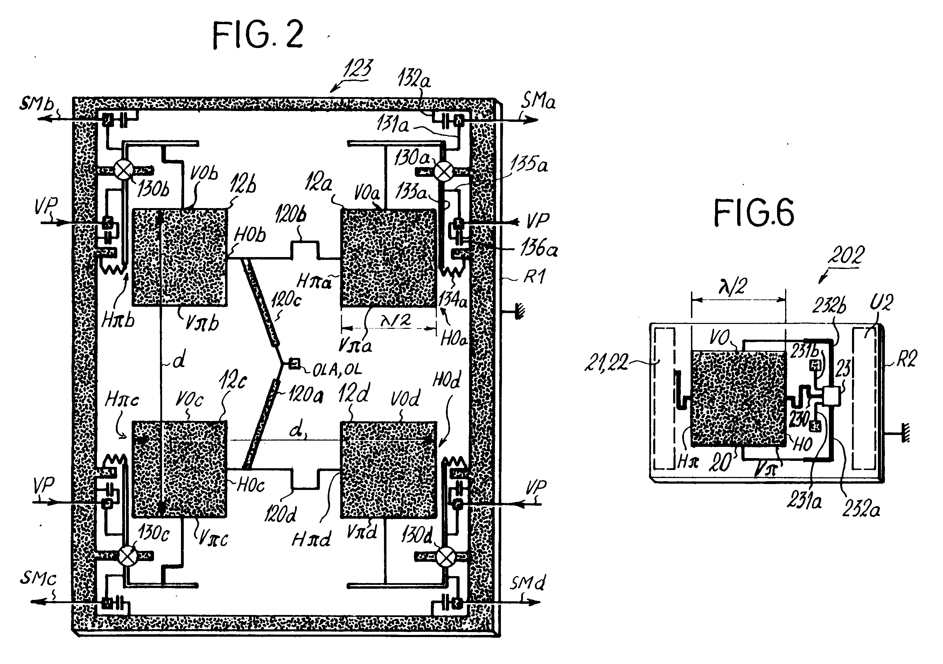

L'antenne micro-onde 12 est une antenne plane à 2n motifs imprimés de forme carrée, où n est un entier supérieur ou égal à 1. Dans la réalisation montrée à la Fig. 1, n est choisi égal à 2 et l'antenne 12 comprend quatre motifs 12a à 12d. En référence également à la Fig. 2, l'antenne 12 est supportée par une plaque de circuit imprimé double faces 123. Sur une face avant, outre les motifs d'antenne 12a à 12d, la plaque 123 support également les mélangeurs 13a à 13d. Une face arrière conductrice de la plaque 123 est reliée à une masse de référence et forme un écran réflecteur R1. Chaque motif 12a à 12d est un carré ayant des côtés de dimension égale à $\lambda/2$, où $\lambda$ est la longueur d'onde correspondant à la fréquence F du signal micro-onde OL. Afin de constituer l'antenne plane micro-onde 12, les quatre motifs 12a à 12d sont disposés respectivement aux quatre coins d'un carré de surface dxd de façon à ce que les côtés des motifs d'antenne soient parallèles et perpendiculaires aux côtés du carré de surface dxd, où de est une dimension caractéristique de l'antenne 12 déterminée de manière connue afin d'obtenir un diagramme de rayonnement désiré. Un motif d'antenne, par exemple 12a, comprend 2 accès à polarisation verticale V0a et V$\pi$a localisés respectivement aux centres de 2 premiers côtés parallèles du motif d'antenne 12a, et 2 accès à polarisation horizontale H0a et H$\pi$a localisés respectivement aux centres de 2 seconds côtés parallèles du motif d'antenne 12a. Un signal micro-onde appliqué à un accès à polarisation verticale ou horizontale d'un motif d'antenne carré produit l'émission d'une micro-onde correspondante polarisée verticalement ou horizontalement respectivement, et réciproquement une micro-onde polarisée verticalement ou horizontalement reçue par le motif d'antenne produit un signal micro-onde correspondant aux deux accès à polarisation verticale ou horizontale du motif d'antenne, respectivement. Deux signaux micro-ondes détectés respectivement aux deux accès à polarisation verticale ou horizontale d'un motif d'antenne carré et correspondant à une même micro-onde reçue sont déphasés de $\pi$ et réciproquement un même signal micro-onde appliqué successivement aux deux accès à polarisation verticale ou horizontale produit deux micro-ondes à polarisation correspondante déphasées de $\pi$ entre elles.

Comme montré à la Fig. 2, les signaux micro-ondes OLA et OL sont fournis aux accès à polari-sation horizontale H$\pi$a, H0b, H0c et H$\pi$d de l'antenne 12 à travers les micro-rubans d'adaptation et de déphasage 120b, 120c, 120a et 120d. Les signaux micro-ondes reçus aux accès H$\pi$a et H$\Pi$d et correspondant au signal OLA ou OL sont déphasés de $\pi$ par rapport aux signaux micro-ondes correspondants reçus aux accès H0b et H0c et l'antenne 12 émet la micro-onde correspondante PA ou P polarisée horizontalement à destination de la station terminale 2.

En référence à la Fig. 1, la station terminale 2 comprend une antenne 20, un circuit de redressement et filtrage 21, un détecteur d'amplitude 22, et un commutateur micro-onde 23.

L'antenne 20 est composée d'un unique motif imprimé carré identique aux motifs imprimés 12a à 12d de l'antenne 12 de la station centrale 1.

Pendant les périodes de transmission de données de l'unité U1 vers l'unité U2, l'antenne 20 reçoit la micro-onde PA modulée en amplitude par le signal D12 et délivre en réponse des signaux micro-ondes correspondants déphasés de $\pi$ entre eux $SA_2$ et $SA(\pi)_2$ respectivement par des accès à polarisation horizontale H0 et H$\pi$. Les signaux $SA_2$ et $SA(\pi)_2$ sont appliqués respectivement à une entrée 230 du commutateur 23 et en entrée des circuits 21 et 22. Pendant les périodes de transmission de données de l'unité U2 vers l'unité U1, l'antenne 20 reçoit la micro-onde P et délivre en réponse des signaux micro-ondes correspondants déphasés de $\pi$ entre eux $SP_2$ et $SP(\pi)_2$ respectivement par les accès H0 et H$\pi$. Les signaux $SP_2$ et $SP(\pi)_2$ sont de même que les signaux $SA_2$ et $SA(\pi)_2$ appliqués respectivement à l'entrée 230 du commutateur 23 et en entrée des circuits 21 et 22.

Le circuit de redressement et filtrage 21 est un circuit classique par exemple du type à une diode de redressement et une capacité de filtrage. Le circuit 21 produit une tension continue d'alimentation VA par redressement et filtrage. La tension VA est fournie à l'unité U2 pour alimenter la totalité ou une partie des circuits de l'unité U2, et éventuellement au détecteur d'amplitude 22. Une pile électrique miniature B est prévue si nécessaire pour fournir à l'unité U2 une tension continue d'alimentation supplémentaire VAa.

Pendant les périodes de transmission de l'unité U1 vers l'unité U2, le détecteur 22 récupère le signal de données D12 par détection directe de l'amplitude du signal. Le signal de données D12 délivré par le détecteur 22 est fourni à l'unité de traitement de données U2.

Selon une première réalisation d'un système de transmission selon l'invention de faible portée, le détecteur 22 de la station terminale 2 est réalisé de manière classique à l'aide d'une diode de détection fonctionnant en régime non linéaire.

Selon une seconde réalisation plus performante du système de transmission selon l'invention, le détecteur 22 est réalisé à l'aide d'un transistor à effet de champs (TEC) fonctionnant en multiplieur pour une détection quadratique du signal de données D12. Dans ce cas la tension d'alimentation VA est fournie au détecteur 22 afin de polariser une grille du transistor TEC.

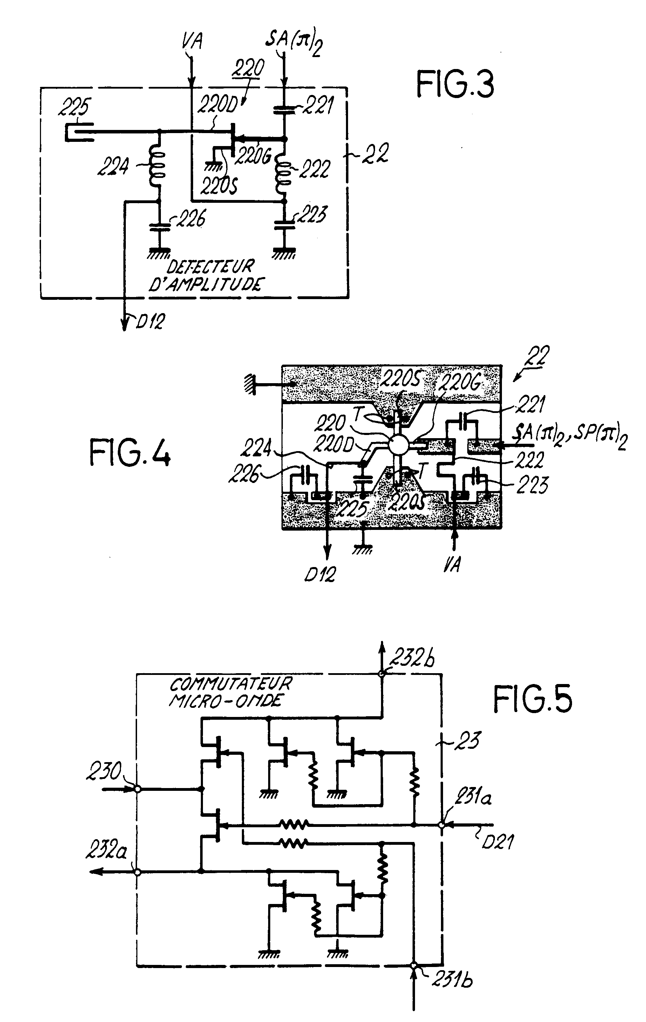

En référence à la Fig. 3, un détecteur 22 pour ladite seconde réalisation du système de transmission selon l'invention comprend essentiellement un transistor TEC, 220.

Le signal micro-onde $SA(\pi)_2$, est fourni à travers un condensateur de liaison 221 à une grille 220G du transistor 220 et à une première borne d'une bobine 222. Une seconde borne de la bobine 222 reçoit la tension d'alimentation VA et est reliée à une masse de référence de la station terminale 2 à travers un condensateur de découplage 223. La tension VA est ici une tension de polarisation négative pour polariser de manière adéquate la grille 220G du transistor 220. Une source 220S du transistor 220 est connectée à la masse. Un drain 220D du transistor 220 est relié à une première borne d'une bobine 224, et à un court-circuit de réflexion 225. Une seconde borne de la bobine 224 est reliée à la masse à travers un condensateur de découplage 226. Pendant les périodes de transmission de données de l'unité U1 vers l'unité U2, le signal $SA(\pi)_2$ appliqué à la grille 220G apparaît également sur le drain 220D du transistor 220 et se propage vers le court-circuit 225. Signal $SA(\pi)_2$ est réfléchi par le court-circuit 225 et revient vers le drain 220D. Le transistor 220 fonctionne en multiplieur et produit le signal $(SA(\pi)_2)^2$. Le signal $(SA(\pi)_2)^2$ a une composante continue proportionnelle à l'amplitude du signal $(SA(\pi)_2)^2$ et représentative du signal de données D12. Cette composante continue représentative du signal D12 est détectée à la seconde borne de la bobine 224 et est fournie à l'unité de traitement de données U2.

Une réalisation pratique correspondante en technologie micro-ruban du détecteur d'amplitude 22 décrit en référence à la Fig. 3 est montrée à titre d'exemple à la Fig. 4. Les bobines 222 et 224 sont réalisées pratiquement par des micro-rubans de longueurs adéquates de même références 222 et 224. Le court-circuit de réflexion 225 est réalisé à l'aide d'un condensateur ayant une première borne reliée au drain 220D du transistor 220 à travers un micro-ruban de longueur adéquate et une seconde borne reliée à la masse. Des trous métallisés T sont prévus de part et d'autre de pattes de connexion de la source 220S du transistor 220.

En référence à la Fig. 1, pendant les périodes de transmissions de données de l'unité U2 vers l'unité U1, l'unité U2 délivre le signal de données D21 à transmettre à l'unité U1 via les stations 2 et 1. Le signal D21 est appliqué à une première entrée de commande 231a du commutateur 23 et à une entrée d'un inverseur logique I. L'inverseur I produit un signal de données $\overline{D21}$ complémentaire au signal D21. Le signal $\overline{D21}$ est appliqué à une seconde entrée de commande 231b du commutateur 23.

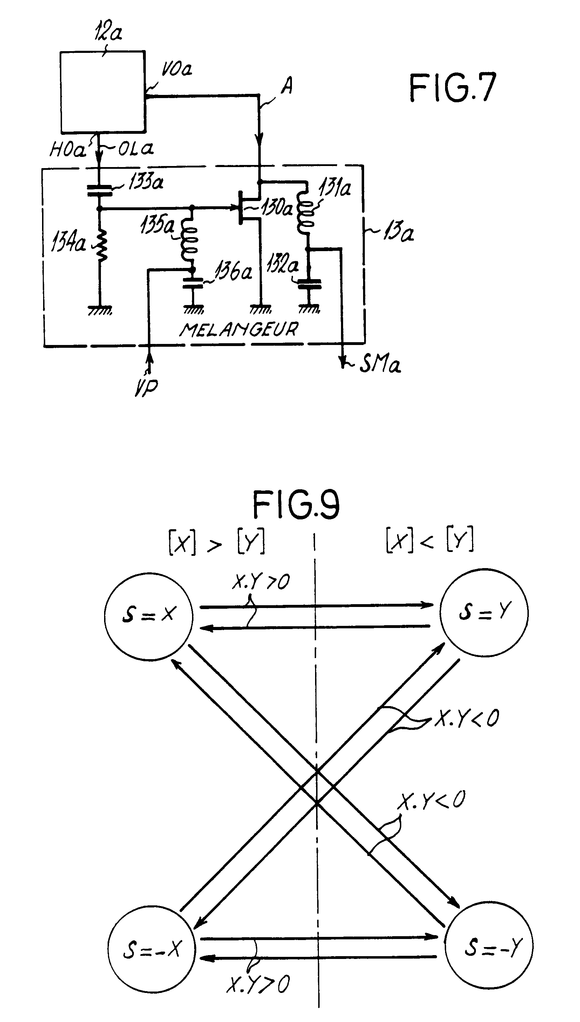

Un schéma de principe du commutateur micro-onde 23 est montré à la Fig. 5, Le commutateur 23 est de préférence un commutateur intégré tel par exemple qu'un commutateur micro-onde à large bande commercialisé par la société TACHONICS CORPORATION sous la référence TCSW-0401. Des première et seconde sorties 232a et 232b du commutateur 23 sont respectivement reliées à des premier et second accès à polarisation verticale $V\pi$ et V0 de l'antenne 20. Lorsque le signal de données D21 est à un état logique "0", l'entrée 230 est reliée à la sortie 232b du commutateur 23 et le signal micro-onde $SP_2$ fourni par l'accès H0 de l'antenne 20 est appliqué à l'accès V0 de l'antenne 20 qui émet en réponse la micro-onde PP correspondante avec une phase relative égale à 0. Lorsque le signal de données D21 est à un état logique "1", l'entrée 230 est reliée à la sortie 232a du commutateur 23 et le signal micro-onde $SP_2$ est appliqué à l'accès $V\pi$ de l'antenne 20 qui émet en réponse la micro-onde PP correspondante avec une phase relative égale à $\pi$. La micro-onde PP est ainsi modulée à deux états de phase 0 et $\pi$ par le signal D21.

En référence à la Fig. 6, la station terminale 2 et l'unité de traitement de données U2 sont inclus dans une carte à puce 202 représentée approximativement à une échelle 3/4. Une face avant de la carte 202 supporte l'antenne 20 et les différents circuits de la station 2 et de l'unité U2. Les circuits de la station 2 et de l'unité U2 se présentent sous la forme de puces dont les pattes de connexion sont soudées à des micro-rubans de la plaque 202. Les localisations sur la carte 202 des circuits 21 et 22 de la station 2, et de l'unité U2 sont montrées en traits discontinus. Un écran réflecteur R2 localisé sur une face arrière de la carte 202 est relié à la masse de référence de la station terminale 2. Pour être intégré dans la carte à puce 202, le détecteur d'amplitude 22 montré aux Figs. 1, 3 et 4 est réalisé sous une forme plus compacte que celle montrée à titre d'exemple à la Fig. 4.

En référence à la Fig. 1, la micro-onde PP émise par l'antenne 20 de la station terminale 2 est reçue dans la station centrale 1 par les $2n = 4$ motifs 12a à 12d de l'antenne 12. Les $2n = 4$ motifs 12a, 12b, 12c et 12d délivrent en réponse à la réception de la micro-onde PP des signaux micro-ondes correspondants A, B, C et D respectivement par les accès à polarisation verticale V0a, V0b, $V\pi c$

et Vπd de l'antenne 12. Les signaux A à D sont appliqués à des premières entrées des mélangeurs 13a et 13d respectivement. Les signaux A à D sont déphasés deux à deux de ±π/2 ou ±π modulo 2π. Des secondes entrées des mélangeurs 13a à 13d reçoivent des signaux d'oscillateur local OLa à OLd respectivement. Les signaux d'oscillateur local OLa, OLb, OLc et OLd sont délivrés respectivement par les accès à polarisation horizontale H0a, Hπb, Hπc et H0d de l'antenne 12 et sont dérivés du signal OL fourni aux motifs d'antenne 12a à 12d par l'oscillateur local 10 à travers le modulateur d'amplitude 11. Les signaux OLa à OLd sont déphasés deux à deux de 0 ou ± π modulo 2π. Les signaux A à D et OLa à OLd sont exprimés par les égalités :

$$A = U \cos(\omega t + \psi + \theta),$$
$$B = U \cos(\omega t + \psi + \theta + 3\pi/2),$$
$$C = U \cos(\omega t + \psi + \theta + \pi),$$
$$\text{et } D = U \cos(\pi t + \psi + \theta + \pi/2),$$
$$\text{et } OLa = V \cos(\omega t),$$
$$OLb = V \cos(\omega t + \pi)$$
$$OLc = V \cos(\omega t),$$
$$\text{et } OLd = V \cos(\omega t + \pi),$$

où U et V sont respectivement des amplitudes des signaux micro-ondes A à B et des signaux d'oscillateur local OLa à OLd, et où $\omega$ et $\psi$ représentent respectivement la pulsation correspondant à la fréquence F du signal OL et un déphasage aléatoire introduit par la transmission radio entre les stations 1 et 2, et où $\theta = 0$ ou $\pi$ représente l'état de phase fonction du signal de données D21 de la micro-onde PP modulée à deux états de phase 0 et $\pi$.

Les mélangeurs 13a à 13d délivrent en sortie respectivement quatre signaux de démodulation basse fréquence SMa à SMd dérivés de produits de signaux A.OLa, B.OLb, C.OLc et D.OLd réalisés par les mélangeurs 13a à 13d. Les signaux SMa à SMd sont fournis au détecteur de phase 14 afin que le détecteur 14 récupère le signal de données D21 à partir des signaux SMa à SMd. Les signaux SMa à SMd sont exprimés par les égalités suivantes :

$$SMa = U.V \cos(\psi + \theta)$$
$$SMb = U.V \cos(\psi + \theta + \pi/2)$$
$$SMc = U.V \cos(\psi + \theta + \pi)$$
$$SMd = U.V \cos(\psi + \theta + 3\pi/2).$$

Les égalités ci-dessus montrent que les signaux SMa à SMd dépendent selon des fonctions trigonométriques sinus ou cosinus de l'état de phase $\theta = 0$ ou $\pi$ de la micro-onde PP et du déphasage aléatoire $\psi$.

Les mélangeurs 13a à 13d ont des structures et fonctionnements analogues. Le mélangeur 13a est montré en détail à la Fig. 7 ; il comprend essentiellement un transistor à effet de champ (TEC) 130a fonctionnant en régime non-linéaire. Un drain du transistor 130a est relié à l'accès V0a du motif d'antenne correspondant 12a et à une première borne d'une bobine 131a. Une seconde borne de la bobine 131a est connectée à la masse à travers un condensateur de découplage 132a. Une source du transistor 130a est connectée à la masse de référence de la station centrale 1. Une grille du transistor 130a est reliée à l'accès H0a du motif d'antenne 12a à travers un condensateur de liaison 133a, et à des premières bornes d'une résistance 134a et d'une bobine 135a. Une seconde borne de la résistance 134a est reliée à la masse. Une seconde borne de la bobine 135a est reliée à la masse à travers un condensateur de découplage 136a.

Les signaux A et OLa sont appliqués respectivement au drain et à la grille du transistor 130a. La grille du transistor 130a est polarisée par une tension négative de polarisation VP appliquée à la second borne de la bobine 135a. Le signal SMa est produit au niveau de la seconde borne de la bobine 131a.

La réalisation pratique en technologie micro-ruban du mélangeur 13a, ainsi que des mélangeurs 13b à 13c, est montrée à la Fig. 2. Les micro-rubans 131a et 135a réalisent les bobines de mêmes références 131a et 135a. Le micro-ruban 133a couple capacitivement la grille du transistor 130a à l'accès H0a du motif d'antenne 12a et réalise la capacité de liaison de même référence 133a.

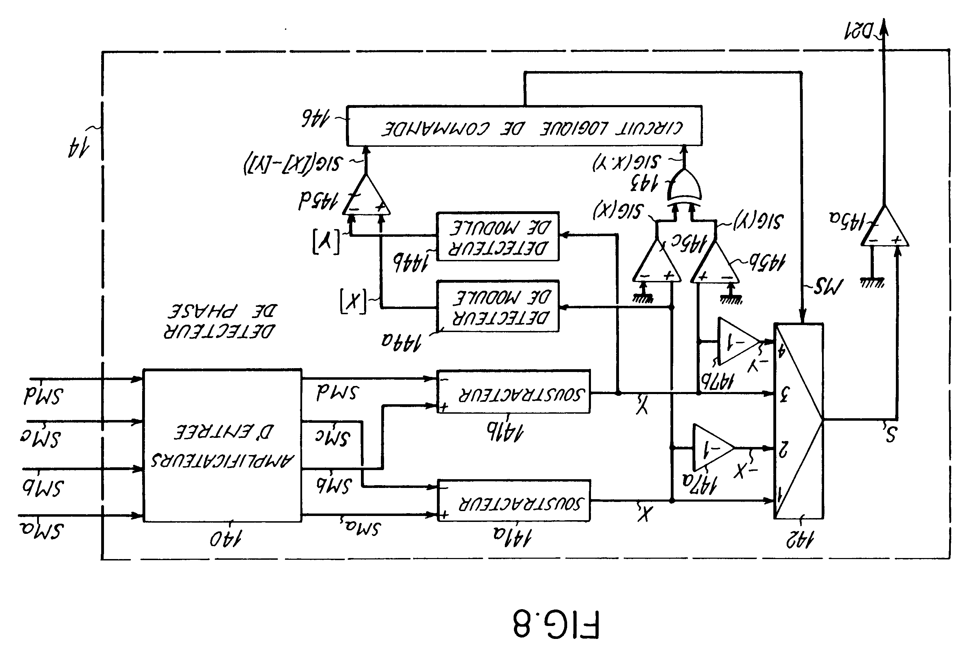

En référence à la Fig. 8, le détecteur de phase 14 comprend essentiellement des amplificateurs d'entrée 140, deux soustracteurs analogiques 141a à 141b, un multiplexeur analogique à quatre entrées 142, une porte OU exclusif à deux entrées 143, deux détecteurs de module 144a et 144b, quatre comparateurs 145a à 145d, et un circuit logique de commande 146.

Les signaux SMa et SMb sont appliqués à travers les amplificatuers d'entrée 140 respectivement à des entrées directes + des soustracteurs 141a et 141b. Les signaux SMc et SMd sont appliqués à travers les amplificateurs d'entrée 140 respectivement à des entrées inverses - des soustracteurs 141a et 141b. Les soustracteurs 141a et 141b délivrent en sortie des signaux X et Y représentatifs des différences de signaux SMa-SMc et SMb-SMd respectivement et exprimés par les égalités suivantes :

$$X = SMa\text{-}SMc = U.V.[\cos(\psi + \theta) - \cos(\psi + \theta + \pi)] = 2.U.V \cos(\psi + \theta), \text{ et}$$
$$Y = SMb\text{-}SMd = U.V.[\cos(\psi + \theta + \pi/2) - \cos$$

$(\psi + \theta + 3\pi/2)] = 2.U.V.\sin(\psi + \theta)$

Les signaux X et Y sont fournis respectivement à des première et troisième entrées du multiplexeur 143. Des signaux -X et -Y représentatifs des différences de signaux SMc-SMa et SMd-SMb sont produits à partir des signaux X et Y par des amplificateurs inverseurs 147a et 147b et sont fournis à des seconde et quatrième entrées du multiplexeur 142 respectivement. L'un S des signaux X, -X, Y et -Y est sélecté par un mot de sélection MS fourni par le circuit logique de commande 146 et appliqué à des entrées de sélection du multiplexeur 142. Le signal sélecté S est fourni à une entrée directe + du comparateur 145a dont une entrée inverse est reliée à la masse de référence. Le comparateur 145a constitue un détecteur de signe délivrant un état logique "0" lorsque le signe du signal S est positif et un état logique "1" dans le cas contraire. Le comparateur 145a délivre en sortie le signal de données D21.

Les comparateurs 145b, 145c et la porte OU exclusif 143 ont pour fonction de produire un signal SIG(X.Y) représentatif du signe du produit des signaux X.Y

Des entrées directes + des comparateurs 145b et 145c reçoivent respectivement les signaux X et Y. Des entrées inverses - des comparateurs 145b et 145c sont reliées à la masse de référence. Le comparateur 145b délivre un signal SIG(X) représentatif du signe du signal X. Le comparateur 145c délivre un signal SIG(Y) représentatif du signe du signal Y. Le signal SIG(X) ou SIG(Y) est à un état logique "0" lorsque le signe du signal correspondant X ou Y est positif et à un état logique "1" dans le cas contraire.

Les signaux SIG(X) et SIG(Y) sont appliqués respectivement à des première et second entrées de la porte 143 et la porte 143 délivre en sortie un signal SIG(X.Y) représentatif du signe du produit des signaux X.Y. Le signal SIG(X.Y) est à un état logique "0" lorsque le signe du produit X.Y est positif et à un état logique "1" dans le cas contraire où le signe du produit X.Y est négatif. Le signal SIG(X.Y) est appliqué à une première entrée du circuit logique de commande 146.

Les détecteurs de module 144a et 144b reçoivent en entrée les signaux X et Y et délivrent en sortie les modules [X] et [Y] de ces signaux, respectivement. Les détecteurs 144a et 144b sont par exemple constitués par des circuits de redressement double alternances de précision. Les modules [X] et [Y] sont fournis respectivement à des entrées directe + et inverse - du comparateur 145d. Le comparateur 145d délivre en sortie un signal SIG([X]-[Y]) représentatif du signe de la différence de modules [X]-[Y]. Le signal SIG([X]-[Y]) est appliqué à une second entrée du circuit logique de commande 146.

Le circuit logique de commande 146 réalise une sélection dynamique du signal S parmi les signaux X, -X, Y, -Y afin de permettre une récupération correcte et optimale du signal de données D21 et ceci indépendamment de variations aléatoires de déphasage dues à la transmission radio et susceptibles d'introduire des erreurs de décision sur le signal D21. A partir des signaux SIG([X]-[Y] et SIG(X.Y) le circuit 146 détecte celui des signaux X et Y qui a un module supérieur ainsi que des changements de signe des signaux X et Y dûs aux variations aléatoires de déphasage. Le module du signal sélecté [S] est pris égal au plus grande des modules [X] et [Y]. Le signe affecté au signal sélecté S dépend des changements de signe détectés des signaux X et Y à partir du signal SIG-(X.Y).

Le diagramme montré à la Fig. 8 précise le signal sélecté S = X, S = -X, S = Y ou S = -Y en fonction de conditions de module [X]>[Y] et [X]<[Y] et de conditions de signe X.Y>0 et X.Y<0 détectées à partir des signaux SIG([X]-[Y]) et SIG(X.Y) respectivement.

Afin de montrer l'interprétation qu'il convient de faire de ce diagramme, il est supposé à titre d'exemple un état initial pendant la transmission où [X]>[Y] est la condition de module détectée ; le signal S = X ou S = -X est alors sélecté. Dans la cas où la condition [X]<[Y] est ensuite détectée, si le signal S = X est le signal sélecté à l'état initial alors la nouvelle condition [X]<[Y] entraîne la sélection du signal S = Y dans le cas où la condition de signe X.Y>0 est également détectée, et entraîne la sélection du signal S = -Y dans le cas où c'est la condition X.Y<0 qui est détectée. Si le signal S = -X est le signal sélecté à l'état initial alors la nouvelle condition [X]<[Y] entraîne la sélection du signal S = -Y dans le cas où la condition de signe X.Y>0 est également détectée et entraîne la sélection du signal S = Y dans le cas où c'est la condition X.Y<0 qui est détectée. L'homme du métier interprètera aisément ce diagramme pour un état initial pendant la transmission où [X]<[Y] est la condition de module détectée.

## Revendications

1. Système radio pour transmettre alternativement par micro-ondes des premier et second signaux de données (D12, D21) entre des première et seconde unités de traitement de données (U1, U2) connectées au système radio, ledit premier signal de données (D12) étant délivré par la première unité (U1) pour être transmis à la seconde unité (U2) pendant des premières périodes de transmission de données de la première unité (U1) vers la seconde unité (U2) et ledit second signal de données (D21) étant délivré par la seconde unité (U2) pour être transmis à la première unité (U1) pendant des secondes périodes de transmission de données de la seconde unité (U2) vers la première unité (U1), ledit système comprenant une station centrale (1) et une station terminale (2) reliées respectivement auxdites première et seconde unités (U1, U2) et émettant et recevant des micro-ondes (PA, P, PP) modulées par les premier et second signaux de données (D12, D21),

la station terminale (2) comprenant une antenne plane carrée (20) recevant et délivrant par des premiers accès (H0, H$\pi$) des première et seconde micro-ondes (PA, SA$_2$, SA($\pi$)$_2$ ; P, SP$_2$, SP($\pi$)$_2$) émises par la station centrale (1) pendant des premières et secondes périodes de transmission de données respectivement, la première micro-onde (PA, SA$_2$, SA($\pi$)$_2$) étant modulée par le premier signal de données (D12) et la seconde micro-onde (P, SP$_2$, SP-($\pi$)$_2$) n'étant pas modulée,

caractérisé par une première polarisation rectiligne (H) des premières et seconde micro-ondes (PA; P) dans la station centrale (1), et

par un commutateur micro-onde (23) dans la station terminale (2) ayant une entrée (230) reliée aux premiers accès (H0) de l'antenne (20) et deux sorties (232a, 232b) respectivement reliées à deux seconds accès (V$\pi$, V0) de l'antenne 20 et commandé en commutation par le second signal de données (D21) pour produire à partir de la seconde micro-onde (P, SP$_2$) reçue à l'entrée (230) du commutateur (23), une troisième micro-onde (PP) modulée à deux états de phase (0, $\pi$) par le second signal de données (D21) et émise par l'antenne (20) à destination de la station centrale (1) pendant les secondes périodes de transmission de données selon une seconde polarisation rectiligne (V) croisée par rapport à ladite première polarisation rectiligne (H).

2. Système radio conforme à la revendication 1, caractérisé en ce que la première micro-onde (PA) est modulée en amplitude par le premier signal de données (D12), et en ce que la station terminale (2) comprend des moyens de détection quadratique (22) pour détecter le premier signal de données (D12) à partir de la première micro-onde reçue (PA).

3. Système radio conforme à la revendication 1 ou 2, caractérisé en ce que lesdits moyens de détection quadratique (22) comprennent un transistor à effet de champ (220) ayant une première électrode (220S) reliée à une masse de référence de la station terminale (2), une seconde électrode (220D) reliée à un court-circuit réflecteur (225) et une troisième électrode (220G) recevant la première micro-onde (PA, SA($\pi$)$_2$) pour produire à la seconde électrode (220D) un signal (SA($\pi$)$_2$)$^2$) représentatif du carré de la première micro-onde (SA($\pi$)$_2$) et détecter une composante continue dudit signal (SA($\pi$)$_2$)$^2$) représentative du premier signal de données (D12).

4. Système radio conforme à l'une quelconque des revendications 1 à 3, caractérisé en ce que la station terminale (2) comprend des moyens (21) reliés aux premiers accès (H$\pi$) de l'antenne (20) pour produire une tension continue d'alimentation (VA) par redressement et filtrage des première et seconde micro-ondes (PA, SA($\pi$)$_2$ ; P, SP($\pi$)$_2$) reçues, ladite tension continue d'alimentation (VA) étant fournie à des circuits de la station terminale (2) et/ou à la seconde unité de traitement de données (U2).

5. Système radio conforme à l'une quelconque des revendications 1 à 4, caractérisé en ce que la station centrale (1) comprend

une antenne plane (12) à 2n éléments plans carrés (12a à 12d), où n est un entier supérieur à 1, ayant 2n premiers accès (H$\pi$a, H0b, H0c, H$\pi$d) recevant respectivement 2n premiers signaux micro-ondes déphasés et 2n seconds signaux micro-ondes déphasés (OLA, OL, 120a à 120d) correspondant respectivement aux première et seconde micro-ondes (PA, P) pour émettre à destination de la station terminale (2) les première et seconde micro-ondes (PA, P) pendant les premières et secondes périodes de transmission de données respectivement, et pour recevoir la troisième micro-onde (PP) pendant les secondes périodes de transmission de données et produire à 2n seconds accès (V0a, V0b, V$\pi$c, V$\pi$d) 2n troisièmes signaux micro-ondes déphasés (A, B, C, D) représentatifs de la troisième micro-onde (PP) reçue, et

des moyens de démodulation de phase (13a à 13d, 14) reliés aux 2n éléments plans carrés (12a à 12d) de l'antenne (12) de la station centrale (1) et recevant lesdits 2n seconds et 2n troisièmes signaux micro-ondes déphasés (OLa à OLd, A à D) pour démoduler le second signal de données (D21) pendant les secondes périodes de transmission de données.

6. Système radio conforme à la revendication 5, caractérisé en ce que lesdits moyens de démodulation de phase (13a à 13d, 14) comprennent

2n mélangeurs micro-ondes (13a à 13d) reliés à des premiers et seconds accès respectivement des 2n éléments plans carrés d'antenne (12a à 12d) pour recevoir chacun (13a) des second et troisième signaux micro-ondes correspondants (OLa, SMa) et pour produire respectivement 2n signaux de démodulation basse fréquence (SMa à SMd) dépendant selon des fonctions trigonométriques (sin, cos) de l'état de phase ($\theta = 0$ ou $\pi$) fonction du second signal de données (D21) de la troisième micro-onde (PP) et d'un déphasage aléatoire ($\psi$) introduit par la transmission radio, et

des moyens (14) pour récupérer le second signal de données (D21) par différence de deux (SMa et SMd, ou SMb et SMc) des 2n signaux de démodulation (SMa à SMd).

7. Système radio conforme à la revendication 6, caractérisé en ce que lesdits moyens pour récupérer (14) comprennent

des moyens (141a, 141b, 147a, 147b) pour calculer 2n différences de signaux (X, -X, Y, -Y) ne dépendant selon des fonctions trigonométriques que de l'état de phase ($\theta = 0$ ou $\pi$) fonction du second signal de données (D21) de la troisième micro-onde (PP), et

des moyens logiques (146) pour sélecter dynamiquement l'une (S) des 2n différences de signaux (X, -X, Y, -Y) en fonction des modules ([X], [Y]) et des signes (SIG[X.Y]) desdites différences (X, -X, Y, -Y) afin de récupérer le second signal de données (D21).

8. Système radio conforme à l'une quelconque des revendications 1 à 7, caractérisé en ce que la station terminale (2) et la seconde unité de traitement de données (U2) sont intégrées dans une carte de paiement sans contact du type carte à puce électronique.

**Claims**

1. Radio system for alternatively transmitting by microwaves first and second data signals (D12, D21) between first and second data processing units (U1, U2) connected to the radio system, said first data signal (D12) being issued by said first unit (U1) to be transmitted to said second unit (U2) during first data transmission periods from the first unit (U1) towards the second unit (U2), and said second data signal (D21) being issued by the second unit (U2) to be transmitted to the first unit (U1) during second data transmission periods front the second unit (U2) towards the first unit (U1), said system comprising a central station (1) and a terminal station (2) respectively connected to said first and second units (U1, U2) and transmitting and receiving microwaves (PA, P, PP) modulated by the first and second data signals (D12, D21), the terminal station (2) comprising a square two-dimensional antenna (20) receiving and issuing via first accesses (H0,H$\pi$) first and second microwaves (PA, SA$_2$, SA($\pi$)$_2$; P, SP$_2$, SP($\pi$)$_2$) transmitted by the central station (1) during first and second data transmission periods respectively, the first microwave (PA, SA$_2$, SA($\pi$)$_2$) being modulated by the first data signal (D12) and the second microwave (P, SP$_2$, SP($\pi$)$_2$) not being modulated,

characterized by a first linear polarization (H) of the first and second microwaves (PA ; P) in the central station (1), and by a microwave switcher (23) in the terminal station (2) having an input (230) connected to the first accesses (H0) of the antenna (20) and two outputs (232a, 232b) respectively connected to two second accesses (V$\pi$, V0) of the antenna (20) and switch-controlled by the second data signal (D21) to produce from the second microwave (P, SP$_2$) received at input (230) of the switcher (23), a third microwave (PP) modulated in two phase states (0,$\pi$) by the second data signal (D21) and transmitted by the antenna (20) towards the central station (1) during the second data transmission periods according to a second linear polarization (V) which is crossed by comparison with said first linear polarization (H).

2. Radio system according to claim 1, characterized in that the first microwave (PA) is modulated in amplitude by the first data signal (D12), and in that the terminal station (2) comprises quadratic detecting means (22) for detecting the first data signal (D12) from the first microwave received (PA).

3. Radio system according to claim 1 or 2, characterized in that said quadratic detecting means (22) comprise a field effect transistor (220) with a first electrode (220S) connected to a reference ground of the terminal station (2), a second electrode (220D) connected to a reflective short circuit (225) and a third electrode (220G) which receives the first microwave (PA, SA($\pi$)$_2$) so as to produce a signal (SA ($\pi$)$_2$) which is representative of the square of the first microwave (SA($\pi$)$_2$) at the second electrode (220D), and to detect a d.c component of said signal ((SA($\pi$)$_2$)$^2$) which is representative of the first data signal (D12).

4. Radio system according to any one of claims 1 to 3, characterized in that the terminal station (2) comprises means (21) connected to the first accesses (Hπ) of the antenna (20) for producing a power supply d.c voltage (VA) by rectifying and filtering of the first and second microwaves (PA, SA(π)$_2$ ; P, SP(π)$_2$) received, said power supply d.c voltage (VA) being provided to circuits of the terminal station (2) and/or to the second data processing unit (U2).

5. Radio system according to any one of claims 1 to 4, characterised in that the central station (1) comprises

a two-dimensional antenna (12) with 2n square two-dimensional elements (12a to 12d) , whereby n is an integer greater than 1, with 2n first accesses (Hπa, H0b, H0c, Hπd) respectively receiving 2n first phase-shifted microwave signals and 2n second phase-shifted microwave signals (OLA, OL, 120a to 120d) which correspond respectively to first and second microwaves (PA, P) to transmit the first and second microwaves (PA, P) towards the terminal station (2) during the first and second data transmission periods respectively, and to receive the third microwave (PP) during the second data transmission periods and to produce at 2n second accesses (V0a, V0b,Vπc, Vπd) 2n phase-shifted microwave signals (A, B, C, D) which are representative of the third microwave (PP) received, and

phase demodulating means (13a to 13d, 14) connected to the 2n square two-dimensional elements (12a to 12d) of the central station (1) antenna (12) and receiving said 2n second and 2n third phase-shifted microwave signals (OLa to OLd, A to D) for demodulating the second data signal (D21) during the second data transmission periods.

6. Radio system according to claim 5, characterized in that said phase demodulating means (13a to 13d, 14) comprise

2n microwave mixers (13a to 13d) connected to first and second accesses of 2n square two-dimensional antenna elements (12a to 12b), respectively, so as to each receive (13a) corresponding second and third microwave signals (OLa, SMa) and to respectively produce 2n low frequency demodulation signals (SMa to SMd) which depend, according to trigonometrical functions (sin, cos), on the phase state (θ = 0 or π) function of the second data signal (D21) in the third microwave (PP) and a random phase shift (ψ) introduced by the radio transmission, and

means (14) for recovering the second data signal (D21) as a function of the difference between two (SMa and SMd, or SMb and SMc) of said 2n demodulation signals (SMa to SMd).

7. Radio system according to claim 6, characterized in that said recovering means (14) comprise

means (141a, 141b, 147a, 147b) for computing 2n signal differences (X, -X, Y, -Y) that only depend according to trigonometrical functions on the phase state (θ = 0 or π) function of the second data signal (D21) in the third microwave (PP), and

logic means (146) for dynamically selecting one (S) of the 2n signal differences (X, -X, Y, -Y) as a function of the moduli ([X], [Y]) and the signs ( SIG [X.Y]) of said differences (X, -X, Y,-Y) so as to recover the second data signal (D21).

8. Radio system according to any on of claims 1 to 7, characterized in that the terminal station (2) and the second data processing unit (U2) are integrated in a contact-free payment card of the electronic chip card type.

**Patentansprüche**

1. Funksystem zur abwechselnden Übertragung erster und zweiter Datensignale (D12, D21) durch Mikrowellen zwischen mit dem Funksystem verbundenen ersten und zweiten Datenverarbeitungseinheiten (U1, U2), wobei das erste Datensignal (D12) durch die erste Einheit (U1) abgegeben wird, um zur zweiten Einheit (U2) während erster Datenübertragungsperioden der ersten Einheit (U1) zur zweiten Einheit (U2) hin übertragen zu werden, und wobei das zweite Datensignal (D21) durch die zweite Einheit (U2) abgegeben wird, um zur ersten Einheit (U1) während zweiter Datenübertragunsperioden der zweiten Einheit (U2) zur ersten Einheit (U1) hin übertragen zu werden, wobei das System eine Zentralstation (1) und eine Terminalstation (2) umfaßt, die jeweils mit den ersten und zweiten Einheiten (U1, U2) verbunden sind und durch die ersten und zweiten Datensignale (D12, D21) modulierte Mikrowellen (PA, P, PP) senden und empfangen,

wobei die Terminalstation (2) eine ebene quadratische Antenne (20) umfaßt, die durch erste Zugriffe (H0, Hπ) erste und zweite Mikrowellen (PA, SA$_2$, SA(π)$_2$; P, SP$_2$, SP(π)$_2$) empfängt und abgibt, die von der Zentralstation (1) während erster und zweiter Datenübertragungsperioden jeweils gesendet werden, wobei die erste Mikrowelle (PA, SA$_2$, SA(π)$_2$) durch das

erste Datensignal (D12) moduliert wird und wobei die zweite Mikrowelle (P, $SP_2$, $SP(\pi)_2$) nicht moduliert wird, **gekennzeichnet** durch eine erste geradlinige Polarisation (H) der ersten und zweiten Mikrowellen (PA; P) in der Zentralstation (1) und durch einen Mikrowellenschalter (23) in der Terminalstation (2), aufweisend einen Eingang (230), der mit den ersten Zugriffen (H0) der Antenne (20) verbunden ist, und zwei Ausgänge (232a, 232b), die jeweils mit zwei zweiten Zugriffen ($V\pi$, V0) der Antenne (20) verbunden sind, und im Schalten gesteuert durch das zweite Datensignal (D21), um ausgehend von der am Eingang (230) des Schalters (23) empfangenen zweiten Mikrowelle (P, $SP_2$) eine dritte Mikrowelle (PP) zu erzeugen, die durch das zweite Datensignal (D21) in zwei Phasenzuständen $(0,\pi)$ moduliert ist und durch die Antenne (20) mit Ziel der Zentralstation (1) während der zweiten Datenübertragungsperioden gemäß einer zweiten geradlinigen Polarisation (V) gesendet wird, die in bezug auf die erste geradlinige Polarisation (H) gekreuzt ist.

2. Funksystem nach Anspruch 1, dadurch **gekennzeichnet,** daß die erste Mikrowelle (PA) in der Amplitude durch das erste Datensignal (D12) moduliert ist und daß die Terminalstation (2) Mittel zur Quadraterfassung (22) umfaßt, um das erste Datensignal (D12) ausgehend von der empfangenen ersten Mikrowelle (PA) zu erfassen.

3. Funksystem nach Anspruch 1 oder 2, dadurch **gekennzeichnet,** daß die Mittel zur Quadraterfassung (22) einen Feldeffekttransistor (220) umfassen, dessen erste Elektrode (220S) mit einer Referenzmasse der Terminalstation (2) verbunden ist, dessen zweite Elektrode (220D) mit einem Kurzschlußreflektor (225) verbunden ist und dessen dritte Elektrode (220G) die erste Mikrowelle (PA, $SA(\pi)_2$) empfängt, um an der zweiten Elektrode (220D) ein das Quadrat der ersten Mikrowelle $(SA(\pi)_2)$ darstellendes Signal $((SA(\pi)_2)^2)$ zu erzeugen und eine Gleichstromkomponente des Signals $((SA(\pi)_2)^2)$ zu erfassen, die das erste Datensignal (D12) darstellt.

4. Funksystem nach einem beliebigen der Ansprüche 1 bis 3, dadurch **gekennzeichnet,** daß die Terminalstation (2) Mittel (21) umfaßt, die mit den ersten Zugriffen ($H\pi$) der Antenne (20) verbunden sind, um eine Versorgungsgleichspannung (VA) durch Gleichrichtung und Filterung der empfangenen ersten und zweiten Mikrowellen (PA, $SA(\pi)_2$; P, $SP(\pi)_2$) zu erzeugen, wobei die Versorgungsgleichspannung (VA) zu Stromkreisen der Terminalstation (2) und/oder der zweiten Datenverarbeitungseinheit (U2) geliefert wird.

5. Funksystem nach einem beliebigen der Ansprüche 1 bis 4, dadurch **gekennzeichnet,** daß die Zentralstation (1) umfaßt
   - eine ebene Antenne 12 mit 2n ebenen Quadratelementen (12a bis 12d), wobei n eine ganze Zahl größer als 1 ist, aufweisend 2n erste Zugriffe ($H\pi$a, H0b, H0c, $H\pi$d, die jeweils 2n phasenverschobene erste Mikrowellensignale und 2n phasenverschobene zweite Mikrowellensignale (OLA, OL, 120a bis 120d) entsprechend jeweils den ersten und zweiten Mikrowellen (PA, P) empfangen, um jeweils die ersten und zweiten Mikrowellen (PA, P) während der ersten und zweiten Datenübertragungsperioden mit Ziel der Terminalstation (2) jeweils zu senden und um die dritte Mikrowelle (PP) während der zweiten Datenübertragungsperioden zu empfangen und bei 2n zweiten Zugriffen (V0a, V0b, $V\pi$c, $V\pi$d) 2n phasenverschobene dritte Mikrowellensignale (A, B, C, D) zu erzeugen, die die empfangene dritte Mikrowelle (PP) darstellen, und
   - Phasendemodulationsmittel (13a bis 13d, 14), die mit den 2n ebenen Quadratelementen (12a bis 12d) der Antenne (12) der Zentralstation (1) verbunden sind und die 2n zweiten und 2n dritten phasenverschobenen Mikrowellensignale (OLa bis OLd, A bis D) empfangen, um das zweite Datensignal (D21) während der zweiten Datenübertragungsperioden zu demodulieren.

6. Funksystem nach Anspruch 5, dadurch **gekennzeichnet,** daß die Phasendemodulationsmittel (13a bis 13d, 14) umfassen
   - 2 n Mikrowellenmischer (13a bis 13d), die jeweils mit ersten und zweiten Zugriffen der 2n ebenen Quadratantennenelemente (12a bis 12d) verbunden sind, um jedes (13a) der zweiten und dritten entsprechenden Mikrowellensignale (OLa, SMa) zu empfangen und um jeweils 2n Niederfrequenzdemodulationssignale (SMa bis SMd) zu erzeugen, abhängig gemäß trigonometrischen Funktionen (sin, cos) des Phasenzustandes ($\theta = 0$ oder $\pi$), Funktion des zweiten Datensignals (D21) der dritten Mikrowelle (PP) und einer durch die Funkübertragung

eingeführten Zufallsphasenverschiebung ($\psi$) und

- Mittel (14) zur Wiedergewinnung des zweiten Datensignals (D21) durch Differenz von zwei (SMa und SMd, oder SMb und SMc) der 2n Demodulationssignale (SMa bis SMd).

7. Funksystem nach Anspruch 6, dadurch **gekennzeichnet,** daß die Mittel zum Wiedergewinnen (14) umfassen

- Mittel (141a, 141b, 147a, 147b) zur Berechnung von 2n Differenzen von Signalen (X, -X, Y, -Y), lediglich abhängig gemäß trigonometrischen Funktionen vom Phasenzustand ($\theta = 0$ oder $\pi$) Funktion des zweiten Datensignals (D 21) der dritten Mikrowelle (PP), und

- logische Mittel (146) zum dynamischen Auswählen einer (S) der 2n Differenzen von Signalen (X, -X, Y, -Y) als Funktion der Module ([X], [Y]) und der Vorzeichen (SIG[X.Y]) der Differenzen (X, -X, Y, -Y), um das zweite Datensignal (D21) wiederzugewinnen.

8. Funksystem nach einem beliebigen der Ansprüche 1 bis 7, dadurch **gekennzeichnet,** daß die Terminalstation (2) und die zweite Datenverarbeitungseinheit (U2) in einer kontaktlosen Zahlungskarte vom Kartentyp mit elektronischem Chip integriert sind.

EP 0 343 034 B1

# FIG.1

**STATION CENTRALE** — 1

14 DÉTECTEUR DE PHASE

SMa
SMb
SMc
SMd

10 OSCILLATEUR LOCAL MICRO-ONDE

OL,F=2,45GHz

11 MODULATEUR D'AMPLITUDE

OLA,OL

13a   OLa   A   VOa   HOa   12a
13b   B   VOb   HOb   12b   Vπa
12   Hπa   12d
VOd   HOd   OLd
Vπd
13d   D

12c   VOc   Hπd
HπC   HOc
VπC   C
OLc
13c

D21   D12

UNITÉ DE TRAITEMENT DE DONNÉES — U1

PA,P

(O)
(π)
PP

**STATION TERMINALE** — 2

VO   HO
20   Hπ
Vπ   SA₂,SP₂

230   23   232b   231a
232a   231b

SA(π)₂,SPπ₂

21 REDRESSEMENT ET FILTRAGE

VA

22 DÉTECTEUR D'AMPLITUDE

D21

D12   I   D21

VAa

U2 UNITÉ DE TRAITEMENT DE DONNÉES

B

# FIG.6

# FIG.2

FIG.3

VA    SA(π)₂

_220_

225    220D ┌ 221

220G    222    22

224    220S    223

226    223

DÉTECTEUR
D'AMPLITUDE

D12

FIG.4

22

220S    220G

220    221
T
220D    224    SA(π)₂, SP(π)₂
226    222
T    223
225    220S

D12    VA

FIG.5

COMMUTATEUR
MICRO-ONDE

232b

23

230    231a
D21

232a

231b

FIG.7

*12a*

*VOa*

*A*

*HOa*  *OLa*

*133a*

*131a*

*~130a*

*134a*  *135a*

*~136a*  *132a*

*~13a*

MELANGEUR

*VP*

*SMa*

FIG.9

$[X] > [Y]$    $[X] < [Y]$

$S = X$    $X.Y > 0$    $S = Y$

$X.Y < 0$

$X.Y < 0$

$S = -X$    $X.Y > 0$    $S = -Y$

16

# FIG.8

EP 0 343 034 B1